# FASCICULE DE BREVET EUROPEEN

(11) **EP 2 778 801 B1**
(45) Date de publication et mention de la délivrance du brevet: **05.06.2019**
(21) Numéro de dépôt: 14152730.9
(22) Date de dépôt: 27.01.2014
(51) Int. Cl.: G04B 31/004, G04B 31/06

(54) **Coussinet comportant des premier et deuxième éléments fonctionnels sur deux faces distinctes**
Lager, das erste und zweite Funktionselemente auf zwei verschiedenen Flächen umfasst
Bushing comprising first and second functional elements on two separate surfaces

(30) Priorité: 11.03.2013 EP 13158576
(43) Date de publication de la demande: 17.09.2014
(73) Titulaire: Comadur S.A., 2400 Le Locle (CH)
(72) Inventeur: Besutti, Bruno, 25140 Charquemont (FR); Barata, Marie-Claire, 25130 Villers-le-Lac (FR); Russi, Christian, 2400 Le Locle (CH)
(74) Mandataire: Goulette, Ludivine

(56) Documents cités:
- CH-A- 297 479
- CH-B5- 583 441
- FR-A1- 2 130 114
- GB-A- 2 010 236
- US-A- 3 883 314

## Description

### Domaine de l'invention

L'invention se rapporte à un coussinet pour une pièce d'horlogerie et notamment un tel coussinet comportant des premier et deuxième éléments fonctionnels sur deux faces distinctes.

### Arrière-plan de l'invention

Il est connu de fabriquer des coussinets à partir d'alumine monocristalline en réduisant par usinage le volume d'une ébauche brute. Toutefois, une fois qu'une première face est usinée pour former un premier élément fonctionnel, il devient très difficile de réaliser un deuxième élément fonctionnel sur une autre face à cause de la fragilité engendrée par l'usinage de la première face. CH 583 441 B5 divulgue un tel procédé de fabrication d'un élément d'ébauches en céramique.

Dès lors, même avec un deuxième élément fonctionnel sur une autre face qui est peu étendu géométriquement, le taux de rebut est trop élevé.

### Résumé de l'invention

Le but de la présente invention est de pallier tout ou partie les inconvénients cités précédemment en proposant un coussinet comportant des premier et deuxième éléments fonctionnels sur deux faces distinctes qui sont étendus géométriquement et un procédé de fabrication permettant de réduire drastiquement le taux de rebut.

A cet effet, l'invention se rapporte à un procédé de fabrication d'un coussinet comportant les étapes suivantes :
a) former un précurseur céramique à partir d'une poudre à base de céramique prise dans un liant ;
b) compresser, à l'aide d'une matrice supérieure et d'une matrice inférieure, le précurseur céramique afin de former un corps vert du futur coussinet avec des surfaces supérieure et inférieure comportant respectivement des premier et deuxième éléments fonctionnels en laissant une épaisseur de matière entre lesdits premier et deuxième éléments fonctionnels ;
c) fritter le corps vert afin de former un corps en céramique ;
d) former un trou traversant dans le corps afin de relier lesdits premier et deuxième éléments fonctionnels.

Avantageusement selon l'invention, chaque face du coussinet peut ainsi être directement formée avec au moins un élément fonctionnel sur chaque face même de manière très étendue, c'est-à-dire même avec des étendues sensiblement identiques sur chaque face, sans induire des taux de rebut rédhibitoires.

Conformément à d'autres caractéristiques avantageuses de l'invention :
- la section maximale de chacun desdits éléments fonctionnels est comprise entre 1,5 et 5 fois celle du trou ;
- la poudre à base de céramique comporte au moins un oxyde métallique, un nitrure métallique ou un carbure métallique ;
- la poudre à base de céramique comporte de l'oxyde d'aluminium et, éventuellement, de l'oxyde de chrome ;
- chaque matrice comporte au moins un poinçon destiné à former un élément fonctionnel distinct ;
- ledit au moins un poinçon comporte une surface sphérique et/ou conique et/ou parallélépipédique ;
- l'étape b) est réalisée par rapprochement des matrices supérieure et inférieure dans un carter ;
- l'étape c) comporte une pyrolyse ;
- le procédé comporte une étape finale de finissage du coussinet pouvant comprendre un rodage et/ou un brossage et/ou un polissage.

De plus, l'invention permet d'obtenir un coussinet à partir du procédé selon l'une des variantes précédentes qui comporte un corps en céramique frittée traversé par un trou caractérisé en ce que le corps comporte une surface supérieure et inférieure dont chacune comporte un élément fonctionnel communiquant avec ledit trou. La section maximale de chaque élément fonctionnel pouvant être comprise entre 1,5 et 5 fois celle du trou.

Un tel coussinet peut notamment être monté ou former tout ou partie d'une platine ou d'un pont de mouvement horloger.

### Description sommaire des dessins

D'autres particularités et avantages ressortiront clairement de la description qui en est faite ci-après, à titre indicatif et nullement limitatif, en référence aux dessins annexés, dans lesquels :
- la figure 1 est une représentation schématique d'une presse double effet selon l'invention ;
- les figures 2 à 5 sont des variantes de matrices selon l'invention ;
- les figures 6 et 7 sont des représentations à différentes étapes de fabrication d'un coussinet selon l'invention ;
- les figures 8 et 9 sont des représentations de deux exemples de coussinets selon l'invention.

### Description détaillée des modes de réalisation préférés

Comme expliqué ci-dessus, l'invention se rapporte à un coussinet destiné à entrer en contact avec un pivot afin de rendre ce dernier mobile en rotation avec un frottement minimal. On comprend donc que la présente invention permet de former tout ou partie d'un palier d'un élément monté à rotation.

Selon l'invention, un tel coussinet est destiné à être monté dans un pont ou une platine ou à former tout ou partie d'une platine ou d'un pont de mouvement horloger. Toutefois, l'invention se saurait se limiter au domaine horloger et peut s'appliquer à tout élément monté mobile par rapport à un palier.

Avantageusement selon l'invention, le coussinet comporte un corps en céramique frittée qui est traversé par un trou destiné à recevoir le pivot, également appelé tourillon. Le corps comporte, de manière avantageuse selon l'invention, une surface supérieure et une surface inférieure dont chacune comporte au moins un élément fonctionnel communiquant avec le trou.

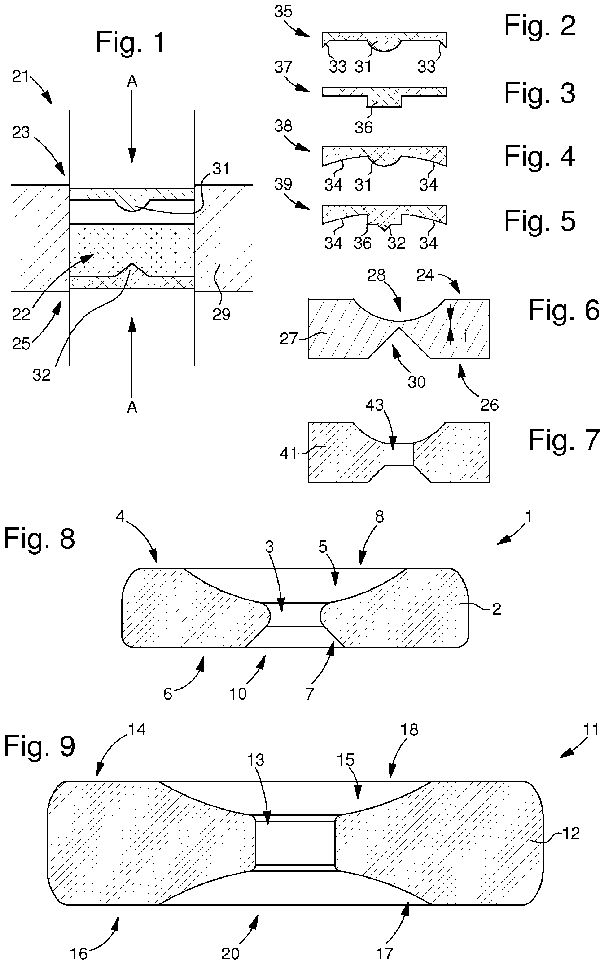

Les figures 8 et 9 présentent deux exemples de coussinets 1, 11 selon l'invention. Le coussinet 1 de la figure 8 comporte un corps 2 généralement annulaire comportant un trou 3, préférentiellement centré, débouchant entre une surface supérieure 4 et une surface inférieure 6. Avantageusement selon l'invention, le trou 3 communique avec un évidement 5 sensiblement sphérique sur la face supérieure 4 en formant un premier élément fonctionnel 8. Dans l'exemple visible à la figure 8, le premier élément fonctionnel 8 s'évase à partir du trou 3 jusqu'à une section maximale sensiblement 4,5 fois plus étendue que celle du trou 3. De plus, le trou 3 communique également avec un évidement 7 sensiblement conique sur la face inférieure 6 en formant un deuxième élément fonctionnel 10. Dans l'exemple visible à la figure 8, le deuxième élément fonctionnel 10 s'évase à partir du trou 3 jusqu'à une section maximale sensiblement 2 fois plus étendue que celle du trou 3. On remarque également que la paroi du corps 2 au niveau du trou 3 comporte un olivage destiné à minimiser le contact avec un pivot mais également faciliter une éventuelle lubrification.

Le coussinet 11 de la figure 9 comporte un corps 12 généralement annulaire comportant un trou 13, préférentiellement centré, débouchant entre une surface supérieure 14 et une surface inférieure 16. Avantageusement selon l'invention, le trou 13 communique avec un évidement 15 sensiblement sphérique sur la face supérieure 14 en formant un premier élément fonctionnel 18. De plus, le trou 13 communique également avec un évidement 17 sensiblement sphérique sur la face inférieure 16 en formant un deuxième élément fonctionnel 20. Dans l'exemple visible à la figure 9, les premier et deuxième éléments fonctionnels 18, 20 s'évasent à partir du trou 13 jusqu'à une section maximale de manière symétrique et sensiblement 3,5 fois plus étendue que celle du trou 13. On remarque également que la paroi du corps 12 au niveau du trou 13 comporte des chanfreins destinés à éviter que le contact avec un pivot ne brise ladite paroi.

A l'aide de ces deux exemples, on s'aperçoit, de manière avantageuse selon l'invention, que chaque élément fonctionnel 8, 10, 18, 20 est indépendant et peut comporter une section maximale aussi étendue sur chacune des faces 4, 6, 14, 16. Bien entendu, comme expliqué ci-dessous, plusieurs éléments fonctionnels 8, 10, 18, 20 identiques ou non peuvent également être formés sur la même face 4, 6, 14, 16. De même comme expliqué ci-dessous, chaque élément fonctionnel 8, 10, 18, 20 ne saurait se limiter à un évidement 5, 7, 15, 17 sensiblement sphériques ou sensiblement coniques, mais avoir une forme différente ou former plusieurs formes combinées.

La variété de production des coussinets sera mieux comprise à partir des figures 1 à 7 présentant un procédé de fabrication d'un coussinet selon l'invention. Le procédé comporte une première étape a) destinée à former un précurseur céramique à partir d'une poudre à base de céramique prise dans un liant.

Selon l'invention, la poudre à base de céramique peut comporter au moins un oxyde métallique, un nitrure métallique ou un carbure métallique. A titre d'exemple, la poudre à base de céramique peut comporter de l'oxyde d'aluminium afin de former du saphir synthétique ou un mélange d'oxyde d'aluminium et d'oxyde de chrome afin de former du rubis synthétique. De plus, le liant peut être de natures variées comme, par exemple, du type polymère ou du type organique.

Le procédé comporte une deuxième étape b) destinée à compresser, à l'aide d'une matrice supérieure 23 et d'une matrice inférieure 25, le précurseur céramique 22 afin de former un corps vert 27 du futur coussinet 1 avec des surfaces supérieure 24 et inférieure 26 comportant respectivement des premier et deuxième éléments fonctionnels 28, 30.

Comme visible à la figure 1, chaque matrice 23, 25 est fixée sur un bras d'une presse double effet 21. Selon l'invention, une des matrices 23, 25 (ou les deux) est rapprochée de l'autre selon les directions A dans un carter 29 afin de former non seulement les faces supérieure 24 et inférieure 26 mais également les parois externes.

Il est bien évidemment possible que plusieurs corps vert 27, identiques ou non, puissent être formés en même temps lors de l'étape b). Une telle variante peut ainsi utiliser deux platines sur lesquelles sont montés mobiles les matrices 23, 25 respectives, une des platines pouvant être utilisés dans son épaisseur pour former le carter 29 décrit ci-dessus pour chaque futur corps vert 27.

On comprend donc que chaque corps vert 27 formé lors de l'étape b) comporte déjà les ébauches 28, 30 des futurs premier et deuxième éléments fonctionnels 8, 10. Pour obtenir ces ébauches 28, 30, chaque matrice 23, 25 sensiblement plane comporte au moins un poinçon 31, 32 destiné à former un élément fonctionnel distinct. A la figure 1, on peut voir que la matrice supérieure 23 comporte un poinçon 31 avec une surface sensiblement sphérique permettant, par exemple, de former un huilier et que la matrice inférieure 25 comporte un poinçon 32 avec une surface sensiblement conique permettant, par exemple, de former un cône de dégagement pour monter le pivot plus facilement notamment lorsqu'il faut le monter à l'aveugle dans le coussinet.

On comprend donc que la grande variété d'éléments fonctionnels 8, 10, 18, 20 sur chaque coussinet 1, 11 est directement apportée par la forme des matrices sans que le futur coussinet en soit fragilisé. A titre d'exemple, d'autres formes de poinçon peuvent être envisagées, plusieurs poinçons peuvent être présents sur une même matrice, la matrice peut elle-même former des surfaces bombées ou encore un poinçon peut supporter lui-même un deuxième poinçon. Des variantes non limitatives de matrices selon l'invention sont présentées aux figures 2 à 5 afin de mieux montrer la variété de coussinets obtenue selon l'invention.

Ainsi, comme visible à la figure 3, la matrice 37 sensiblement plane peut comporter un poinçon 36 avec une surface sensiblement parallélépipédique. Dans l'exemple illustré à la figure 2, la matrice 35 sensiblement plane peut comporter un poinçon 31 avec une surface sensiblement sphérique et un poinçon 33 s'étendant annulairement de manière conique pour former un chanfrein sur la paroi externe du corps vert. A la figure 4, on peut voir, la matrice 38 comportant une courbure 34, c'est-à-dire non plane, s'évasant autour d'un poinçon 31 avec une surface sensiblement sphérique. Enfin dans une dernière proposition de variante, comme visible à la figure 5, la matrice 39 comportant une courbure 34, c'est-à-dire non plane, peut également comporter un premier poinçon 36 avec une surface sensiblement parallélépipédique et un deuxième poinçon 32 en prolongement du premier avec une surface sensiblement conique.

Préférentiellement selon l'invention, une épaisseur *i* de matière est laissée entre chaque ébauche des premier et deuxième éléments fonctionnels 28, 30 afin d'éviter leur détérioration lors de l'étape c) générant un retrait. L'épaisseur globale du corps vert 27 étant comprise entre 250 µm et 1 mm, l'épaisseur *i* de matière est préférentiellement comprise entre 10 et 100 *µ*m. On comprend donc que les proportions du retrait sont plus homogènes que si le trou entre les premier et deuxième éléments fonctionnels 28, 30 était déjà présent avant le frittage.

Le procédé comporte une troisième étape c) destinée à fritter le corps vert 27 afin de former un corps 41 en céramique. Préférentiellement selon l'invention, l'étape c) comporte une pyrolyse. L'étape c) engendre un retrait compris en 15% et 30% du volume du corps vert 27. Enfin, le procédé comporte une quatrième étape d) destinée à former un trou 43 traversant dans le corps 41 afin de relier les premier et deuxième éléments fonctionnels 28, 30. L'étape d) est préférentiellement réalisée à l'aide d'un rayonnement destructif du type laser afin d'obtenir une gravure très précise. Toutefois, l'étape d) peut être obtenue à l'aide d'autres types de processus comme, par exemple, un retrait mécanique tel qu'un perçage mécanique ou un gravage à eau haute pression.

Le procédé peut également comporter une étape finale de finissage du coussinet. Une telle étape finale de finissage peut ainsi comporter un rodage et/ou un brossage et/ou un polissage permettant l'ajustage des cotes finales et/ou le retrait d'arêtes et/ou la modification locale de la rugosité.

On comprend donc qu'on peut obtenir des sections maximales de chaque élément fonctionnel 8, 18, 10, 20 qui peuvent être sensiblement identiques (figure 9) ou non (figure 7, 8), constantes (poinçon 36) ou non (poinçon 31, 32) et qui sont comprises préférentiellement entre 1,5 et 5 fois celle du trou 3, 13, sans que le procédé soit plus difficile à mettre en oeuvre ou engendre un taux de rebut plus défavorable. En effet, les biseautages, ou olivages, seuls du trou d'un coussinet, qui offrent une section maximale supérieure à 1, ne sauraient être interprétés comme un élément fonctionnel au sens de l'invention.

Bien entendu, la présente invention ne se limite pas à l'exemple illustré mais est susceptible de diverses variantes et modifications qui apparaîtront à l'homme de l'art. En particulier, d'autres types d'éléments fonctionnels formés par d'autres géométries de poinçons et/ou de matrices peuvent être envisagés avantageusement selon l'invention.

## Revendications

1. Procédé de fabrication d'un coussinet (1, 11) comportant les étapes suivantes :
a) former un précurseur céramique à partir d'une poudre (22) à base de céramique prise dans un liant ;
b) compresser, à l'aide d'une matrice supérieure (23, 25, 35, 37, 38, 39) et d'une matrice inférieure (23, 25, 35, 37, 38, 39), le précurseur céramique (22) afin de former un corps vert (27) du futur coussinet (1, 11) avec des surfaces supérieure (24) et inférieure (26) comportant respectivement des premier et deuxième éléments fonctionnels (28, 30) en laissant une épaisseur (*i*) de matière entre lesdits premier et deuxième éléments fonctionnels ;
c) fritter le corps vert (27) afin de former un corps (41) en céramique ;
d) former un trou (43) traversant dans le corps (41) afin de relier lesdits premier et deuxième éléments fonctionnels.

2. Procédé selon la revendication précédente, **caractérisé en ce que** la section maximale de chacun desdits éléments fonctionnels est comprise entre 1,5 et 5 fois celle du trou (43).

3. Procédé selon la revendication précédente, **caractérisé en ce que** la poudre à base de céramique comporte au moins un oxyde métallique, un nitrure métallique ou un carbure métallique.

4. Procédé selon la revendication précédente, **caractérisé en ce que** la poudre à base de céramique comporte de l'oxyde d'aluminium.

5. Procédé selon la revendication précédente, **caractérisé en ce que** la poudre à base de céramique comporte en outre de l'oxyde de chrome.

6. Procédé selon l'une des revendications précédentes, **caractérisé en ce que** chaque matrice (23, 25, 35, 37, 38, 39) comporte au moins un poinçon (31, 32, 33, 34, 36) destiné à former un élément fonctionnel distinct.

7. Procédé selon la revendication précédente, **caractérisé en ce que** ledit au moins un poinçon (31, 32, 33, 34, 36) comporte une surface sphérique.

8. Procédé selon la revendication 6 ou 7, **caractérisé en ce que** ledit au moins un poinçon (31, 32, 33, 34, 36) comporte une surface conique.

9. Procédé selon l'une des revendications 6 à 8, **caractérisé en ce que** ledit au moins un poinçon (31, 32, 33, 34, 36) comporte une surface parallélépipédique.

10. Procédé selon l'une des revendications précédentes, **caractérisé en ce que** l'étape b) est réalisée par rapprochement des matrices supérieure (23, 25, 35, 37, 38, 39) et inférieure (23, 25, 35, 37, 38, 39) dans un carter (29).

11. Procédé selon l'une des revendications précédentes, **caractérisé en ce que** l'étape c) comporte une pyrolyse.

12. Procédé selon l'une des revendications précédentes, **caractérisé en ce qu'**il comporte une étape finale de finissage du coussinet (1, 11).

13. Procédé selon la revendication précédente, **caractérisé en ce que** l'étape finale de finissage comporte un rodage et/ou un brossage et/ou un polissage.

## Patentansprüche

1. Verfahren zum Herstellen eines Lagers (1, 11), umfassend die folgenden Schritte:
a) Bilden eines keramischen Vorprodukts aus einem Pulver (22) auf Keramikbasis, das in ein Bindemittel eingebracht ist;
b) Verdichten des keramischen Vorprodukts (22) mit Hilfe einer oberen Matrize (23, 25, 35, 37, 38, 39) und einer unteren Matrize (23, 25, 35, 37, 38, 39), um einen Grünkörper (27) des künftigen Lagers (1, 11) zu bilden, dessen obere Fläche (24) und dessen untere Fläche (26) erste bzw. zweite funktionale Elemente (28, 30) aufweisen, indem eine Materialdicke (*i*) zwischen dem ersten und dem zweiten funktionalen Element belassen wird;
c) Sintern des Grünkörpers (27), um einen Keramikkörper (41) zu bilden;
d) Bilden einer Durchgangsöffnung (43) in dem Körper (41), um die ersten und zweiten funktionalen Elemente zu verbinden.

2. Verfahren nach dem vorhergehenden Anspruch, **dadurch gekennzeichnet, dass** der maximale Querschnitt jedes der funktionalen Elemente im Bereich des 1,5- bis 5-fachen Querschnitts der Öffnung (43) liegt.

3. Verfahren nach dem vorhergehenden Anspruch, **dadurch gekennzeichnet, dass** das Pulver auf Keramikbasis mindestens ein Metalloxid, ein Metallnitrid oder ein Metallcarbid enthält.

4. Verfahren nach dem vorhergehenden Anspruch, **dadurch gekennzeichnet, dass** das Pulver auf Keramikbasis Aluminiumoxid enthält.

5. Verfahren nach dem vorhergehenden Anspruch, **dadurch gekennzeichnet, dass** das Pulver auf Keramikbasis ferner Chromoxid enthält.

6. Verfahren nach einem der vorhergehenden Ansprüche, **dadurch gekennzeichnet, dass** jede Matrize (23, 25, 35, 37, 38, 39) mindestens einen Stempel (31, 32, 33, 34, 36) umfasst, der dazu bestimmt ist, ein definiertes funktionales Element zu bilden.

7. Verfahren nach dem vorhergehenden Anspruch, **dadurch gekennzeichnet, dass** der mindestens eine Stempel (31, 32, 33, 34, 36) eine kugelförmige Fläche aufweist.

8. Verfahren nach Anspruch 6 oder 7, **dadurch gekennzeichnet, dass** der mindestens eine Stempel (31, 32, 33, 34, 36) eine konische Fläche aufweist.

9. Verfahren nach einem der Ansprüche 6 bis 8, **dadurch gekennzeichnet, dass** der mindestens eine Stempel (31, 32, 33, 34, 36) eine parallelepipedförmige Fläche aufweist.

10. Verfahren nach einem der vorhergehenden Ansprüche, **dadurch gekennzeichnet, dass** der Schritt b) durch Aufeinanderzubewegen der oberen Matrize (23, 25, 35, 37, 38, 39) und der unteren Matrize (23, 25, 35, 37, 38, 39) in einem Gehäuse (29) ausgeführt wird.

11. Verfahren nach einem der vorhergehenden Ansprüche, **dadurch gekennzeichnet, dass** der Schritt c) eine Pyrolyse enthält.

12. Verfahren nach einem der vorhergehenden Ansprüche, **dadurch gekennzeichnet, dass** es einen letzten Schritt der Endbearbeitung des Lagers (1, 11) umfasst.

13. Verfahren nach dem vorhergehenden Anspruch, **dadurch gekennzeichnet, dass** der letzte Schritt der Endbearbeitung ein Läppen und/oder ein Bürsten und/oder ein Polieren umfasst.

## Claims

1. Method for manufacturing a bearing (1, 11) including the following steps:
a) forming a ceramic precursor from a ceramic-based powder (22) bound in a binder;
b) compressing, using an upper die (23, 25, 35, 37, 38, 39) and a lower die (23, 25, 35, 27, 38, 39), the ceramic precursor (22) so as to form a green body (27) of the future bearing (1, 11) with top (24) and bottom (26) surfaces including respectively first and second functional elements (28, 30) leaving a thickness (i) of material between said first and second functional elements;
c) sintering the green body (27) so as to form a ceramic body (41);
d) forming a through hole (43) in the body (41) so as to connect said first and second functional elements.

2. Method according to the preceding claim, **characterised in that** maximum cross-section of each of said functional elements is between 1.5 and 5 times that of the hole (43).

3. Method according to the preceding claim, **characterised in that** the ceramic-based powder includes at least a metal oxide, a metal nitride or a metal carbide.

4. Method according to the preceding claim, **characterised in that** the ceramic-based power includes aluminium oxide.

5. Method according to the preceding claim, **characterised in that** the ceramic-based powder further includes chromium oxide.

6. Method according to one of the preceding claims, **characterised in that** each die (23, 25, 35, 37, 38, 39) includes at least one punch (31, 32, 33, 34, 36) intended to form a separate functional element.

7. Method according to the preceding claim, **characterised in that** said at least one punch (31, 32, 33, 34, 36) includes a spherical surface.

8. Method according to the preceding claim, **characterised in that** said at least one punch (31, 32, 33, 34, 36) includes a conical surface.

9. Method according to the preceding claim, **characterised in that** said at least one punch (31, 32, 33, 34, 36) includes a parallelepipedal surface.

10. Method according to one of the preceding claims, **characterised in that** step b) is carried out by bringing the upper die (23, 25, 35, 37, 38, 39) and lower die (23, 25, 35, 37, 38, 39) closer together in a casing (29).

11. Method according to one of the preceding claims, **characterised in that** step c) includes pyrolysis.

12. Method according to the preceding claims, **characterised in that** it includes a final bearing (1, 11) finishing step.

13. Method according to the preceding claim, **characterised in that** the final finishing step includes lapping and/or brushing and/or polishing.
